# EUROPEAN PATENT APPLICATION

(11) **EP 4 060 957 A1**
(43) Date of publication of application: **21.09.2022**
(21) Application number: 20908656.0
(22) Date of filing: 30.09.2020
(51) Int. Cl.: H04L 29/06

(54) **ACCESS CONTROL METHOD, APPARATUS AND SYSTEM**

(30) Priority: 31.12.2019 CN 201911419109
(71) Applicant: Huawei Technologies Co., Ltd., Shenzhen, Guangdong 518129 (CN)
(72) Inventor: HUANG, Zhongjin, Shenzhen, Guangdong 518129 (CN); LIANG, Qiandeng, Shenzhen, Guangdong 518129 (CN)
(74) Representative: Pfenning, Meinig & Partner mbB
(86) International application number: PCT/CN2020/119566
(87) International publication number: WO 2021/135485

(57) **Abstract**

This application discloses an access control method, apparatus, and system, and relates to the communications field, to configure an access policy without considering a device specification of a policy enforcement point in an end-to-end VXLAN scenario, thereby improving networking flexibility. A specific solution is as follows: A control point obtains a correspondence between a plurality of groups and a plurality of access policies; determines that a user in a first group accesses a network by using a first policy enforcement point, where the first group belongs to the plurality of groups; and sends, to the first policy enforcement point, a first access policy corresponding to the first group, where the first access policy belongs to the plurality of access policies, and the first access policy is used to determine whether the first group is accessible by a second group.

## Description

This application claims priority to Chinese Patent Application No. 201911419109.8, filed with the China National Intellectual Property Administration on December 31, 2019 and entitled "ACCESS CONTROL METHOD, APPARATUS, AND SYSTEM", which is incorporated herein by reference in its entirety.

### TECHNICAL FIELD

Embodiments of this application relate to the communications field, and in particular, to an access control method, apparatus, and system.

### BACKGROUND

In network communication, a controller usually selects a network device as a policy enforcement point, and deploys an access policy on the policy enforcement point. The policy enforcement point performs rights and bandwidth control on a traffic packet based on the access policy.

The access policy is usually deployed statically. Policy enforcement points are specified by the controller together and full access policies (a large set of access measurements configured on the network for access control) are delivered to the policy enforcement points together. The large scale of access policies imposes a strict specification requirement for the policy enforcement point. In networking, the policy enforcement point needs to be arranged on a device at the aggregation or core layer.

With the development of virtual extensible local area network (Virtual Extensible Local Area Network, VXLAN) technologies, an access layer device also functions as a policy enforcement point in an end-to-end VXLAN deployment scenario (a VLAN tunnel is established between the access layer and the core layer). However, the access layer device is usually a low-end device (such as an access switch or an AP), and deploying a large quantity of policies together is difficult.

How to configure an access policy without considering a specification of a policy enforcement point in an end-to-end VXLAN scenario is an urgent problem to be resolved.

### SUMMARY

This application provides an access control method and apparatus, to configure an access policy without considering a specification of a policy enforcement point in an end-to-end VXLAN scenario, thereby improving networking flexibility.

To achieve the foregoing objective, the following technical solutions are used in embodiments of this application.

According to a first aspect, this application provides an access control method. The method may include: obtaining, by a control point, a correspondence between a plurality of groups and a plurality of access policies; determining, by the control point, that a user in a first group accesses a network by using a first policy enforcement point, where the first group belongs to the plurality of groups; and sending, by the control point to the first policy enforcement point, a first access policy corresponding to the first group, where the first access policy belongs to the plurality of access policies, and the first access policy is used to determine whether the first group is accessible by a second group.

By using the access control method provided in this application, the control point selects an access policy that needs to be used when a policy enforcement point performs policy control (the access policy is used to determine whether a group in which a user accesses the network by using the policy enforcement point is accessible), and sends the access policy to the policy enforcement point, to implement on-demand configuration without deploying full access policies at the policy enforcement point, relaxing a specification requirement for the policy enforcement point. In an end-to-end VXLAN scenario, an access policy is configured without considering a specification of the policy enforcement point, improving networking flexibility.

The first access policy is an access policy corresponding to the first group serving as a destination group. There may be one or more second groups.

It should be noted that, the control point may implement access policy configuration by using the access control method provided in this application for each policy enforcement point managed by the control point. This application describes only an interaction process between the control point and one policy enforcement point managed by the control point. Details are not described.

With reference to the first aspect, in a possible implementation, in the correspondence between the plurality of groups and the plurality of access policies, one access policy corresponds to a destination group and a source group. In this application, an access policy sent to a policy enforcement point is whether a group in which a user accesses a network by using the policy enforcement point is accessible, to be specific, an access policy corresponding to a destination group in the correspondence when a group in which a user accesses a network by using the policy enforcement point serves as the destination group.

With reference to the first aspect or any one of the foregoing possible implementations, in another possible implementation, the access control method provided in this application may further include: sending, by the control point to a second policy enforcement point, a second access policy corresponding to the first group. The second access policy belongs to the plurality of access policies. The second access policy is used to determine whether the first group is capable of accessing a third group that accesses the network by using the second policy enforcement point. An access policy used to determine whether a group in which a user accesses a network by using the second policy enforcement point is accessible is sent to the second access policy, to be specific, an access policy corresponding to a destination group in the correspondence when a group in which a user accesses a network by using the second policy enforcement point serves as the destination group.

With reference to any one of the foregoing possible implementations of the first aspect, in another possible implementation, the first policy enforcement point may be an authentication point for the user in the first group. Before the control point sends the first access policy corresponding to the first group to the first policy enforcement point, the access control method provided in this application may further include: receiving, by the control point, a request message from the first policy enforcement point. The request message is used to request the first access policy. Correspondingly, after receiving the request message, the control point sends the first access policy to the first policy enforcement point, so that the policy enforcement point serving as the authentication point implements access policy configuration based on a request-response pattern.

With reference to the first aspect or any one of the foregoing possible implementations, in another possible implementation, the sending, by the control point, a first access policy to the first policy enforcement point may be specifically implemented as follows: sending, by the control point by using a control and provisioning of wireless access points (control and provisioning of wireless access points protocol specification, CAPWAP) protocol or a border gateway protocol (border gateway protocol, BGP)-ethernet virtual private network (ethernet virtual private network, EVPN) protocol, the first access policy to the first policy enforcement point.

With reference to the first aspect or any one of the foregoing possible implementations, in another possible implementation, the first policy enforcement point may be an access layer device.

With reference to the first aspect or any one of the foregoing possible implementations, in another possible implementation, the sending, by the control point, a first access policy to the first policy enforcement point may be specifically implemented as follows: sending, by the control point, the first access policy to the first policy enforcement point when obtaining the correspondence between the plurality of groups and the plurality of access policies.

With reference to the first aspect or any one of the foregoing possible implementations, in another possible implementation, the sending, by the control point, a first access policy to the first policy enforcement point may be specifically implemented as follows: sending, by the control point, the first access policy to the first policy enforcement point when receiving a traffic packet to be sent to the first policy enforcement point.

According to a second aspect, this application provides another access control method. The method may include: determining, by a policy enforcement point, that a user requesting to access a network belongs to a first group; obtaining, by the policy enforcement point from a control point, a first access policy corresponding to the first group, where the first access policy is used to determine whether the first group is accessible by a second group; receiving, by the policy enforcement point, a first packet whose destination is the user and group information indicating that a sender of the first packet belongs to the second group; and determining, by the policy enforcement point based on the first access policy and the group information, whether to send the first packet to the user.

By using the access control method provided in this application, the policy enforcement point obtains, from the control point, an access policy that needs to be used when the policy enforcement point performs policy control, to be specific, obtains an access policy used to determine whether a group in which a user accesses the network by using the policy enforcement point is accessible, to implement on-demand configuration without deploying full access policies at the policy enforcement point, relaxing a specification requirement for the policy enforcement point. In an end-to-end VXLAN scenario, an access policy is configured without considering a device specification of the policy enforcement point, improving networking flexibility.

With reference to the second aspect, in a possible implementation, the group information indicating that the sender of the first packet belongs to the second group may include a source security group identifier (identity, ID) carried in the first packet.

With reference to the second aspect, in a possible implementation, the access control method provided in this application may further include: receiving, by the policy enforcement point, a second packet sent by the user; and sending, by the policy enforcement point, the second packet and an identifier of the first group based on a destination of the second packet.

With reference to the second aspect or any one of the foregoing possible implementations, in another possible implementation, the sending, by the policy enforcement point, the second packet and an identifier of the first group based on a destination of the second packet may be specifically implemented as follows: sending, by the policy enforcement point, the second packet and the identifier of the first group through a VXLAN tunnel.

With reference to the second aspect or any one of the foregoing possible implementations, in another possible implementation, the first policy enforcement point may be an authentication point for the user in the first group. The obtaining, by the policy enforcement point from a control point, a first access policy corresponding to the first group may be specifically implemented as follows: sending, by the policy enforcement point, a request message to the control point, where the request message is used to request an access policy corresponding to the first group; and receiving, by the policy enforcement point from the control point, the first access policy corresponding to the first group. By using this implementation, the policy enforcement point serving as the authentication point implements access policy configuration based on a request-response pattern.

With reference to the second aspect or any one of the foregoing possible implementations, in another possible implementation, the obtaining, by the policy enforcement point from a control point, a first access policy corresponding to the first group may be specifically implemented as follows: receiving, by the policy enforcement point from the control point by using a CAPWAP or BGP-EVPN protocol, the first access policy corresponding to the first group.

With reference to the second aspect or any one of the foregoing possible implementations, in another possible implementation, the policy enforcement point may be an access layer device.

According to a third aspect, this application provides still another access control method, applied to an access control system. The access control system includes a control point and one or more policy enforcement points. The method may include: obtaining, by the control point, a correspondence between a plurality of groups and a plurality of access policies; determining, by the control point, that a user in a first group accesses a network by using a first policy enforcement point, where the first group belongs to the plurality of groups; sending, by the control point to the first policy enforcement point, a first access policy corresponding to the first group, where the first access policy belongs to the plurality of access policies, and the first access policy is used to determine whether the first group is accessible by a second group. The first policy enforcement point determines that a user requesting to access the network belongs to the first group. The first policy enforcement point obtains, from the control point, the first access policy corresponding to the first group. The first policy enforcement point receives a first packet whose destination is the user and group information indicating that a sender of the first packet belongs to the second group. The first policy enforcement point determines, based on the first access policy and the group information, whether to send the first packet to the user.

By using the access control method provided in this application, the control point selects an access policy that needs to be used when a policy enforcement point performs policy control (the access policy is used to determine whether a group in which a user accesses the network by using the policy enforcement point is accessible), and sends the access policy to the policy enforcement point, to implement on-demand configuration without deploying full access policies at the policy enforcement point, relaxing a specification requirement for the policy enforcement point. In an end-to-end VXLAN scenario, an access policy is configured without considering a specification of the policy enforcement point, improving networking flexibility.

It should be noted that, for specific implementation of the access control method provided in the third aspect, reference may be made to the specific implementation of the first aspect or the second aspect. Details are not described herein again.

According to a fourth aspect, this application provides an access control apparatus, configured to implement the method described in the first aspect. The access control apparatus may be a control point or an apparatus that supports a control point in implementing the method described in the first aspect. For example, the apparatus includes a chip system. For example, the access control apparatus may include an obtaining unit, a determining unit, and a sending unit.

The obtaining unit is configured to obtain a correspondence between a plurality of groups and a plurality of access policies.

The determining unit is configured to determine that a user in a first group accesses a network by using a first policy enforcement point. The first group belongs to the plurality of groups.

The sending unit is configured to send, to the first policy enforcement point, a first access policy corresponding to the first group. The first access policy belongs to the plurality of access policies. The first access policy is used to determine whether the first group is accessible by a second group.

It should be noted that specific implementation of each unit in the fourth aspect is the same as the corresponding method description in the first aspect, and details are not described herein again.

According to a fifth aspect, this application provides another access control apparatus. The access control apparatus is deployed on a policy enforcement point, and is configured to implement the method described in the second aspect. The access control apparatus is a policy enforcement point or an apparatus that supports a policy enforcement point in implementing the method described in the second aspect. For example, the apparatus includes a chip system. For example, the access control apparatus may include a determining unit, an obtaining unit, a first receiving unit, and a control unit.

The determining unit is configured to determine that a user requesting to access a network belongs to a first group.

The obtaining unit is configured to obtain, from a control point, a first access policy corresponding to the first group. The first access policy is used to determine whether the first group is accessible by a second group.

The first receiving unit is configured to receive a first packet whose destination is the user in the first group and group information indicating that a sender of the first packet belongs to the second group.

The control unit is configured to determine, based on the first access policy and the group information, whether to send the first packet to the user.

It should be noted that specific implementation of each unit in the fifth aspect is the same as the corresponding method description in the second aspect, and details are not described herein again.

It should be noted that the functional modules in the fourth aspect and the fifth aspect may be implemented by hardware, or may be implemented by hardware executing corresponding software. The hardware or software includes one or more modules corresponding to the functions. For example, a transceiver is configured to implement functions of a receiving unit and a sending unit, a processor is configured to implement a function of a processing unit, and a memory is configured to store program instructions used by the processor to process the methods in embodiments of this application. The processor, the transceiver, and the memory are connected through a bus and implement mutual communication.

According to a sixth aspect, this application provides an access control system. The access control system includes a control point and one or more policy enforcement points. Details are as follows:

The control point is configured to: obtain a correspondence between a plurality of groups and a plurality of access policies; determine that a user in a first group accesses a network by using a first policy enforcement point, where the first group belongs to the plurality of groups; and send, to the first policy enforcement point, a first access policy corresponding to the first group, where the first access policy belongs to the plurality of access policies, and the first access policy is used to determine whether the first group is accessible by a second group.

The policy enforcement point is configured to: determine that a user requesting to access the network belongs to the first group; obtain, from the control point, the first access policy corresponding to the first group, where the first access policy is used to determine whether the first group is accessible by the second group; receive a first packet whose destination is the user and group information indicating that a sender of the first packet belongs to the second group; and determine, based on the first access policy and the group information, whether to send the first packet to the user.

According to a seventh aspect, this application provides an access control apparatus. The access control apparatus may implement functions of the control point in the foregoing method examples. The functions may be implemented by hardware, or may be implemented by hardware executing corresponding software. The hardware or software includes one or more modules corresponding to the functions. The access control apparatus may exist in the product form of a chip.

With reference to the seventh aspect, in a possible implementation, a structure of the access control apparatus includes a processor and a transceiver. The processor is configured to support the access control apparatus in performing a corresponding function in the foregoing method. The transceiver is configured to support communication between the access control apparatus and another device. The access control apparatus may further include a memory. The memory is configured to be coupled to the processor, and store program instructions and data that are necessary for the access control apparatus.

According to an eighth aspect, this application provides another access control apparatus. The access control apparatus may implement functions of the policy enforcement point in the foregoing method examples. The functions may be implemented by hardware, or may be implemented by hardware executing corresponding software. The hardware or software includes one or more modules corresponding to the functions. The access control apparatus may exist in the product form of a chip.

With reference to the eighth aspect, in a possible implementation, a structure of the access control apparatus includes a processor and a transceiver. The processor is configured to support the access control apparatus in performing a corresponding function in the foregoing method. The transceiver is configured to support communication between the access control apparatus and another device. The access control apparatus may further include a memory. The memory is configured to be coupled to the processor, and store program instructions and data that are necessary for the access control apparatus.

According to a ninth aspect, this application provides an access control system, including an access control apparatus configured to perform functions of the control point in the foregoing method, and one or more access control apparatuses configured to perform functions of the policy enforcement point in the foregoing method.

According to a tenth aspect, a computer-readable storage medium including instructions is provided. When the instructions are run on a computer, the computer is enabled to perform the access control method provided in any one of the foregoing aspects or any possible implementations.

According to an eleventh aspect, a computer program product including instructions is provided. When the computer program product runs on a computer, the computer is enabled to perform the access control method provided in any one of the foregoing aspects or any possible implementations.

According to a twelfth aspect, an embodiment of this application provides a chip system. The chip system includes a processor, and may further include a memory, configured to implement functions of a control point or a policy enforcement point in the foregoing method. The chip system may include a chip, or may include a chip and another discrete component.

It should be noted that various possible implementations of any one of the foregoing aspects may be combined provided that the solutions are not contradictory.

### BRIEF DESCRIPTION OF DRAWINGS

FIG. 1 is a schematic diagram of a local area network architecture;
FIG. 2 is a schematic diagram of a campus management network architecture;
FIG. 3 is a schematic diagram of another local area network architecture;
FIG. 4 is a schematic diagram of a structure of an access control apparatus according to an embodiment of this application;
FIG. 5 is a schematic flowchart of an access control method according to an embodiment of this application;
FIG. 6 is a schematic flowchart of another access control method according to an embodiment of this application;
FIG. 7 is a schematic diagram of another local area network architecture according to an embodiment of this application;
FIG. 8 is a schematic diagram of a structure of another access control apparatus according to an embodiment of this application;
FIG. 9 is a schematic diagram of a structure of still another access control apparatus according to an embodiment of this application;
FIG. 10 is a schematic diagram of a structure of yet another access control apparatus according to an embodiment of this application; and
FIG. 11 is a schematic diagram of a structure of yet another access control apparatus according to an embodiment of this application.

### DESCRIPTION OF EMBODIMENTS

In the specification, claims, and accompanying drawings of this application, the terms "first", "second", "third", and the like are intended to distinguish between different objects but do not limit a particular order.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" or the like is intended to present a relative concept in a specific manner.

For clear and concise descriptions of the following embodiments, nouns and related technologies in this specification are briefly described herein.

A group, also referred to as a security group, is a set of users. A user included in a group is referred to as a user in the group. The group described in this application is used to correspond to an access policy. A relationship between a user and a group may depend on a service feature, such as a type or an occupied bandwidth, of the user. This is not limited in this application. A group to which a user belongs is determined in a user authentication phase. A network device accessed by the user is known to the group to which the user belongs.

A group ID is used to uniquely indicate a group, and a form and content of the group ID are not limited in this application.

A control point may refer to a network device serving as a centralized control point on a network. The control point may be classified into a wireless control point device and a wired control point device.

An authentication point refers to a client device used for terminal user authentication. The authentication point may be usually a network device at the edge of a network.

A policy enforcement point (also referred to as a distributed policy enforcement point) is a network device responsible for performing rights and/or bandwidth control on traffic. The policy enforcement point may be usually a network device at the edge of a network.

An access policy (also referred to as a security policy) is a rule for performing network security control (rights control or the like). One access policy corresponds to a destination group and a source group.

Access control is explained as follows: When a network device serving as a destination-end policy enforcement point receives a traffic packet, the destination-end policy enforcement point finds a corresponding destination group ID in user authentication entries based on destination address information carried in the traffic packet, and uses a group to which a sender of the traffic packet belongs as a source group. The policy enforcement point performs policy control on the traffic packet based on an access policy corresponding to the source group and the destination group, and determines whether to send the packet to a destination user.

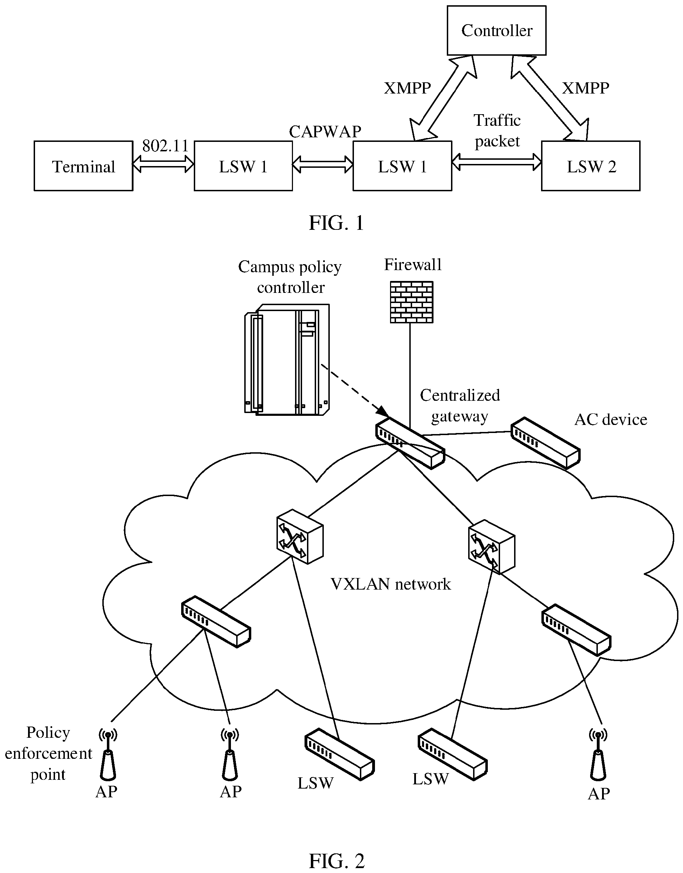

In a local area network architecture shown in FIG. 1, a controller delivers full access policies to a local area network switch (local area network switch, LSW) 1 and an LSW 2 (the LSW 1 and the LSW 2 are policy enforcement points) by using an extensible messaging and presence protocol (extensible messaging and presence protocol, XMPP) protocol. Both the LSW 1 and the LSW 2 function as authentication points for users to perform authentication on users in their respective areas. Wireless traffic of a user (the user is authenticated on the LSW 1) is forwarded through a tunnel. The LSW 1 performs VXLAN encapsulation on the traffic to obtain a VXLAN packet and sends the VXLAN packet to a destination end. The VXLAN packet carries a source group ID (an identifier of a group to which the user belongs). The LSW 2 device managing a destination-end terminal obtains the source group ID from the VXLAN packet, searches user authentication entries based on VXLAN packet address information carried in the VXLAN packet to obtain destination group information, selects an access policy corresponding to the destination group information and the source group ID, and performs policy control on the VXLAN packet.

In this process, policy enforcement points are specified together and access policies are delivered together for static deployment. Full access policies are usually deployed at the policy enforcement point. The large scale of policies imposes a strict specification requirement for the policy enforcement point. In networking, the policy enforcement point usually needs to be arranged on a device at the aggregation or core layer for implementation. However, in an end-to-end VXLAN deployment scenario, an access layer device also serves as a policy enforcement point.

In a campus management network architecture shown in FIG. 2, a campus policy controller delivers a wired/wireless unified access policy to a centralized gateway "border" and an access controller (access controller, AC) device. The border functions as a centralized gateway and is responsible for centralized traffic forwarding and control. The border and the AC device function as centralized wired and wireless control points respectively, and access policies are deployed synchronously by using the campus policy controller. On the campus management network shown in FIG. 2, an end-to-end VXLAN is deployed (a VXLAN tunnel is established between the access layer and the core layer) to unify the wired and wireless architectures. A wireless access point (access point, AP) and an LSW are access layer devices and serve as policy enforcement points. The AP and the LSW are deployed at the access layer. An access layer device is usually a low-end device (such as an access switch or an AP). Due to a hardware specification limitation of the access layer device, a large quantity of policies cannot be deployed.

It is easily figured out that different access policies can be delivered to different specified policy enforcement points by using the controller. However, this requires an administrator to perform a large quantity of manual arrangements. In addition, if personnel mobility exists, because a policy is statically arranged, the administrator needs to modify the policy continuously based on the personnel mobility, resulting in high maintenance costs.

In view of this, embodiments of this application provide an access control method. A basic principle of the method is as follows: A control point selects an access policy used to determine whether a group in which a user accesses a network by using a policy enforcement point is accessible, and sends the access policy to the policy enforcement point. The access policy sent to the policy enforcement point is an access policy that needs to be used when the policy enforcement point performs policy control. Therefore, on-demand configuration is implemented without deploying full access policies at the policy enforcement point, relaxing a specification requirement for the policy enforcement point. In an end-to-end VXLAN scenario, an access policy is configured without considering a specification of the policy enforcement point, improving networking flexibility.

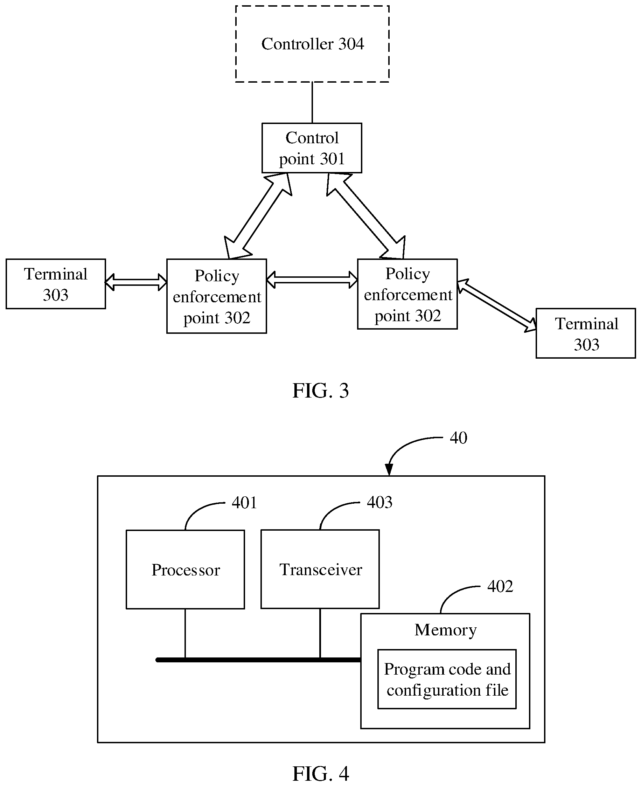

The access control method provided in this application may be applied to a local area network architecture shown in FIG. 3. As shown in FIG. 3, the local area network architecture includes a control point 301, a plurality of policy enforcement points 302, and a terminal 303.

The control point 301 is configured to manage the plurality of policy enforcement points 302, and deliver an access policy to the policy enforcement point 302 by using the solution provided in this application.

The policy enforcement point 302 may be an access layer device, or may be an aggregation layer device, or may be a core layer device. This is not specifically limited in this embodiment of this application. For example, when the policy enforcement point 302 is an access layer device, a product form of the policy enforcement point 302 may be an AP, an LSW, or the like. This is not limited in this application.

The terminal 303, namely, a communications device used by a user, may be replaced by the user described in this application equivalently. The terminal 303 may be a mobile phone, a tablet computer, a notebook computer, an ultra-mobile personal computer (Ultra-mobile Personal Computer, UMPC), a netbook, a personal digital assistant (Personal Digital Assistant, PDA), an e-book, a mobile television, a wearable device, a personal computer (Personal Computer, PC), or the like. In communications systems of different standards, terminals may have different names, but all the terminals having different names may be understood as the terminal described in this application. A type of the terminal is not specifically limited in embodiments of this application either.

For example, in the network architecture shown in FIG. 3, the terminal 303 performs authentication on the AP-type policy enforcement point 302 or the control point 301 to access a network. An authentication process of the terminal 303 is not described in this application. The terminal 303 may access the network by accessing the AP-type policy enforcement point 302 and by using an 802.11 protocol.

Further, as shown in FIG. 3, the local area network architecture may further include a controller 304 serving as an administrator to manage a device in the local area network. For example, the controller 304 may be a campus policy controller in the campus management network architecture shown in FIG. 2.

For example, in the network architecture shown in FIG. 3, the controller 304 is responsible for centralized service orchestration, and may deliver and configure global access policies to the control point 301 (such as an AC) by using a NETCONF protocol. The control point 301 is responsible for collecting a subnet corresponding to a service set identifier (service set identifier, SSID) of the AP-type policy enforcement point 302 and a media access control (media access control, MAC) address and host routing information that are of a terminal 303 accessed by the AP, generating a corresponding route, encapsulating the route by using BGP-EVPN, and disseminating the route to the LSW-type policy enforcement point 302. The AP-type policy enforcement point 302 indirectly interacts with the LSW-type policy enforcement point 302 by using the control point 301, to disseminate an EVPN route, and establish a VXLAN tunnel.

It should be noted that the protocol name used for communication between network elements in FIG. 3 is merely an example, and this is not specifically limited in this embodiment of this application. FIG. 3 merely illustrates a network topology architecture. In actual application, a scale and a connection relationship of a network topology applied in the solution of this application may be configured based on an actual situation. This is not specifically limited in this embodiment of this application.

It should be further noted that, an actual product form of each network element in the accompanying drawings of this application may be configured based on an actual requirement. The accompanying drawings merely illustrate a type of each network element, but do not specifically limit the foregoing network elements.

The following describes embodiments of this application in detail with reference to the accompanying drawings.

According to an aspect, an embodiment of this application provides an access control apparatus. FIG. 4 shows an access control apparatus 40 related to embodiments of this application. The access control apparatus 40 may be deployed on the control point 301 or the policy enforcement point 302 in the network architecture shown in FIG. 3. As shown in FIG. 4, the access control apparatus 40 may include a processor 401, a memory 402, and a transceiver 403.

With reference to FIG. 4, the following specifically describes each component of the access control apparatus 40.

The memory 402 may be a volatile memory (volatile memory), such as a random access memory (random access memory, RAM); or a non-volatile memory (non-volatile memory), such as a read-only memory (read-only memory, ROM), a flash memory (flash memory), a hard disk drive (hard disk drive, HDD), or a solid-state drive (solid-state drive, SSD); or a combination of the foregoing types of memories. The memory 402 is configured to store program code, a configuration file, or other content that can implement the methods in this application.

The processor 401 is a control center of the access control apparatus 40, and may be a central processing unit (central processing unit, CPU), or may be an application-specific integrated circuit (application-specific integrated circuit, ASIC), or may be one or more integrated circuits configured to implement this embodiment of this application, for example, one or more microprocessors (digital signal processors, DSPs), or one or more field programmable gate arrays (field programmable gate arrays, FPGAs).

The transceiver 403 is configured to communicate with and transmit data to another device.

In a possible implementation, the access control apparatus 40 is deployed on a control point. By running or executing a software program and/or module stored in the memory 402 and invoking data stored in the memory 402, the processor 401 performs the following functions:
obtaining a correspondence between a plurality of groups and a plurality of access policies; determining that a user in a first group accesses a network by using a first policy enforcement point, where the first group belongs to the plurality of groups; sending, by using the transceiver 403 to the first policy enforcement point, a first access policy corresponding to the first group, where the first access policy belongs to the plurality of access policies, and the first access policy is used to determine whether the first group is accessible by a second group.

In another possible implementation, the access control apparatus 40 is deployed on a policy enforcement point. By running or executing a software program and/or module stored in the memory 402 and invoking data stored in the memory 402, the processor 401 performs the following functions:
determining that a user requesting to access a network belongs to a first group; obtaining, from the control point, a first access policy corresponding to the first group, where the first access policy is used to determine whether the first group is accessible by a second group; receiving a first packet whose destination is the user and group information indicating that a sender of the first packet belongs to a second group; and determining, based on the first access policy and the group information, whether to send the first packet to the user.

According to another aspect, an embodiment of this application further provides an access control method. The method is applied to an interaction process between a control point and a policy enforcement point. It should be noted that there is a same interaction process between the control point and each policy enforcement point controlled by the control point. In the following embodiment of this application, only an interaction process between the control point and one policy enforcement point (a first policy enforcement point) managed by the control point is used as an example for description. Details are not described one by one.

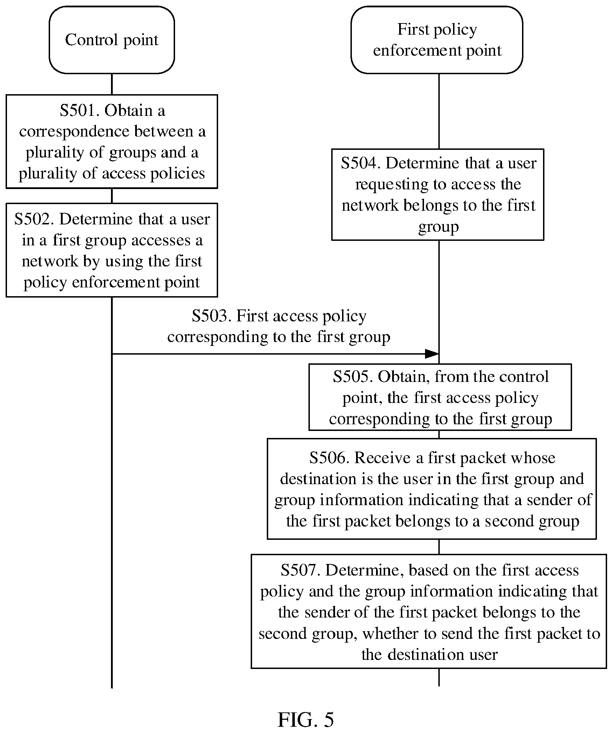

As shown in FIG. 5, the access control method provided in this embodiment of this application may include the following steps.

S501. A control point obtains a correspondence between a plurality of groups and a plurality of access policies.

In a possible implementation, in S501, the control point may receive, from a controller, the correspondence between the plurality of groups and the plurality of access policies. An interaction protocol and a specific interaction manner between the control point and the controller are not limited in this embodiment of this application.

For example, the controller may deliver the correspondence between the plurality of groups and the plurality of access policies to the control point by using a NETCONF protocol.

For example, the controller may be a campus controller in a campus management system, and the control point may be a border or an AC device. An actual product form of the network element is not limited in this embodiment of this application.

In another possible implementation, in S501, the control point may receive the correspondence between the plurality of groups and the plurality of access policies that is configured by an administrator.

Specifically, in the correspondence between the plurality of groups and the plurality of access policies that is obtained by the control point in S501, each access policy corresponds to a source group and a destination group. The source group and the destination group may be indicated by using a source group ID and a destination group ID, and details are not described one by one.

A source group and a destination group corresponding to an access policy are used to indicate a packet controlled by the access policy. For example, when a network device serving as a destination-end policy enforcement point receives a traffic packet, the destination-end policy enforcement point finds a corresponding destination group ID in user authentication entries based on destination address information carried in the traffic packet, and obtains a source group ID to which a sender of the traffic packet belongs. The destination-end policy enforcement point selects an access policy corresponding to the source group ID and the destination group ID and determines whether to send the traffic packet to the destination user.

For example, Table 1 shows the correspondence between the plurality of groups and the plurality of access policies that is obtained by the control point in S501, and a row in Table 1 indicates a correspondence between one access policy and a source group ID and a destination group ID that are of the access policy.

**Table 1**

| Access policies | Source group ID | Destination group ID |
|---|---|---|
| Access policy 1 | ID a | ID b |
| Access policy 2 | ID c | ID d |
| Access policy 3 | ID e | ID f |
| ... | ... | ... |

It should be noted that Table 1 is merely an example for description, but does not specifically limit a form and content of the correspondence between the plurality of groups and the plurality of access policies.

It should be further noted that, the correspondence between the plurality of groups and the plurality of access policies that is obtained by the control point in S501 may be a correspondence between all or some access policies deployed on the network and source groups and destination groups. This is not limited in this application.

S502. The control point determines that a user in a first group accesses a network by using a first policy enforcement point.

The first group belongs to the foregoing plurality of groups. The first policy enforcement point is a policy enforcement point device managed by the control point. The management relationship between the control point and the policy enforcement point may be configured by the administrator or determined in another manner, and is not limited in this embodiment of this application.

Specifically, a policy enforcement point for a user to access a network may be determined in an authentication phase for the user to access the network, the access relationship is recorded on the control point, and the access relationship records a user that accesses the network by using each policy enforcement point managed by the control point and a group to which the user belongs. For example, in S502, the access point determines, based on the access relationship, that the user in the first group accesses the network by using the first policy enforcement point.

Further, there may be one or more users who access the network by using the first policy enforcement point, and the one or more users may belong to one or more groups. Correspondingly, there may be one or more first groups.

S503. The control point sends, to the first policy enforcement point, a first access policy corresponding to the first group.

The first access policy belongs to the foregoing plurality of access policies, and the first access policy is used to determine whether the first group is accessible by a second group. It should be understood that, that the first access policy is used to determine whether the first group is accessible by the second group may mean that the first access policy is an access policy in which a source group is the second group and a destination group is the first group and that is in the correspondence between the plurality of groups and the plurality of access policies. There may be one or more first access policies.

The second group may be a source group obtained when a destination group is the first group in the correspondence between the plurality of groups and the plurality of access policies.

For example, based on the correspondence between the plurality of groups and the plurality of access policies shown in Table 1, if identifiers of groups to which all terminals accessing the network by using one policy enforcement point belong are an ID f and an ID b, for the control point in S503, a first access policy corresponding to the policy enforcement point may be an access policy 1 and an access policy 3.

Specifically, in S503, the control point may send the first access policy to the first policy enforcement point by using a communications protocol between the control point and the first policy enforcement point.

For example, that the control point sends the first access policy to the first policy enforcement point in S503 may be specifically implemented as follows: The control point sends the first access policy to the first policy enforcement point by using a CAPWAP protocol or a BGP-EVPN protocol.

Optionally, the first policy enforcement point may be an access layer device. Certainly, the first policy enforcement point may be alternatively an aggregation layer device, a core layer device, or the like.

S504. The first policy enforcement point determines that a user requesting to access the network belongs to the first group.

In S504, the first policy enforcement point may determine, based on a service of the user, a configuration of a terminal used by the user, or other content, a group to which the user requesting to access the network belongs. A specific determining solution is not specifically limited in this embodiment of this application.

S505. The first policy enforcement point obtains, from the control point, the first access policy corresponding to the first group.

The first access policy obtained by the first policy enforcement point from the control point in S505 is the first access policy sent by the control point to the first policy enforcement point in S503. Details are not described herein again.

For example, that the first policy enforcement point receives the first access policy from the control point in S505 may be specifically implemented as follows: The first policy enforcement point receives the first access policy from the control point by using a CAPWAP protocol or a BGP-EVPN protocol.

S506. The first policy enforcement point receives a first packet whose destination is the user in the first group and group information indicating that a sender of the first packet belongs to the second group.

The first packet may include the group information. The group information may be an ID of the second group, in other words, may be group information indicating that the sender of the first packet belongs to the second group.

Specifically, the first packet is a packet obtained after traffic sent by a user of a source terminal arrives at the access layer device and the access layer device encapsulates the traffic.

Further, the first packet may further include a destination identifier, used to indicate a destination of the first packet.

Optionally, in S506, when receiving the first packet, the first policy enforcement point determines, based on the destination of the first packet, whether a destination terminal accesses the first policy enforcement point. If the first policy enforcement point determines that the destination terminal accesses the first policy enforcement point, the first policy enforcement point performs S507 for policy control. If the first policy enforcement point determines that the destination terminal does not access the first policy enforcement point, the first policy enforcement point performs forwarding. A forwarding process is not described in this embodiment of this application.

S507. The first policy enforcement point determines, based on the first access policy and the group information indicating that the sender of the first packet belongs to the second group, whether to send the first packet to the destination user.

Specifically, in S507, the first policy enforcement point selects, from the first access policy, an access policy corresponding to the source group ID (an identifier of the second group) and the destination group ID (an ID of the group to which the destination belongs, namely, the first group), performs policy control on the first packet, and determines whether to send the first packet to the destination user.

It should be noted that the first group and the second group described in this embodiment of this application describe the solution of this application only from a perspective of one group, and constitute no specific limitation. In actual application, each group may be considered as the first group and/or the second group to perform the solution of this application. Specific implementation is similar, and details are not described one by one.

By using the access control method provided in this application, the control point selects an access policy that needs to be used when a policy enforcement point performs policy control (the access policy is used to determine whether a group in which a user accesses the network by using the policy enforcement point is accessible), and sends the access policy to the policy enforcement point, to implement on-demand configuration without deploying full access policies at the policy enforcement point, relaxing a specification requirement for the policy enforcement point. In an end-to-end VXLAN scenario, an access policy is configured without considering a specification of the policy enforcement point, improving networking flexibility.

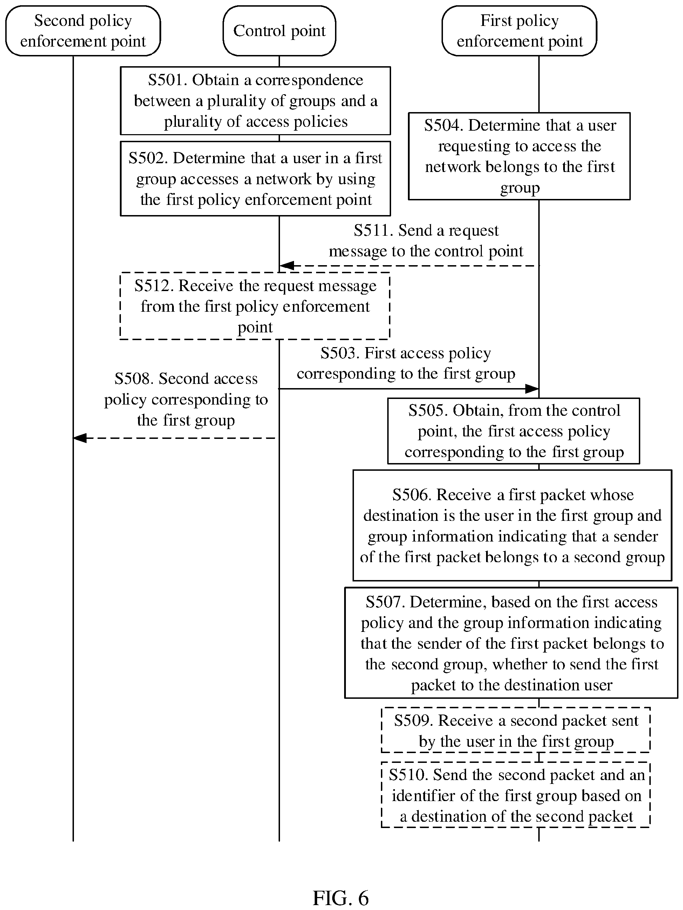

Further, the foregoing process from S501 to S507 describes an interaction process between the control point and the first policy enforcement point when the first policy enforcement point serves as a destination-end device. Certainly, in actual application, the first policy enforcement point may also serve as a source-end network device, and the control point may send, to a policy enforcement point other than the first policy enforcement point, an access policy corresponding to the first group serving as the source group in the correspondence. As shown in FIG. 6, the access control method provided in this application may further include S508.

S508. The control point sends, to a second policy enforcement point, a second access policy corresponding to the first group.

The second access policy belongs to the plurality of access policies, and the second access policy is used to determine whether the first group is capable of accessing a third group that accesses the network by using the second policy enforcement point.

It should be understood that, that the second access policy is used to determine whether the first group is capable of accessing the third group that accesses the network by using the second policy enforcement point may mean that the second access policy is an access policy in which a source group is the first group and a destination group is the third group and that is in the correspondence between the plurality of groups and the plurality of access policies. There may be one or more second access policies.

The third group may be a destination group obtained when a source group is the first group in the correspondence between the plurality of groups and the plurality of access policies.

Further, when the first policy enforcement point serves as a source-end network device, the first policy enforcement point may further send a packet of the user to the destination. As shown in FIG. 6, the access control method provided in this application may further include S509 and S510.

S509. The first policy enforcement point receives a second packet sent by the user in the first group.

The first policy enforcement point receives the second packet sent by the user in the first group, and the second packet indicates a destination of the second packet. After encapsulating the second packet, the first policy enforcement point performs S510 to send the encapsulated second packet to the destination.

For example, the second packet may include destination address information to indicate the destination of the second packet.

S510. The first policy enforcement point sends the second packet and an identifier of the first group based on the destination of the second packet.

Specifically, the first policy enforcement point may send the second packet based on the destination of the second packet along a network path to the destination, and simultaneously send the identifier of the first group, so that a destination policy enforcement point may select an access policy based on the identifier of the first group, and determine whether to send the second packet to the destination user. For a specific operation of the destination policy enforcement point, refer to the foregoing policy control process of the first policy enforcement point. Details are not described again.

For example, in S510, the first policy enforcement point sends, based on the destination of the second packet, the second packet that carries the identifier of the first group.

Further, the terminal may be configured to perform authentication at the control point, or at the policy enforcement point. When the first policy enforcement point is an authentication point for the user in the first group, as shown in FIG. 6, the access control method provided in this embodiment of this application may further include S511 and S512.

S511. The first policy enforcement point sends a request message to the control point.

The request message is used to request the first access policy corresponding to the first group; to be specific, the request message is used to request an access policy for a destination group to which the terminal accessing the network by using the first policy enforcement point belongs.

In a possible implementation, after the terminal completes authentication, the first policy enforcement point may perform S511. An execution occasion of S511 is not specifically limited in this application.

S512. The control point receives the request message from the first policy enforcement point.

The request message received by the control point from the first policy enforcement point in S512 is the request message sent by the first policy enforcement point in S512. Details are not described herein again.

Further, after receiving the request message in S512, the control point may perform S503 to send the first access policy to the first policy enforcement point.

It should be noted that, an execution sequence of the foregoing steps included in the access control method provided in this embodiment of this application may be configured based on an actual requirement. FIG. 5 or FIG. 6 shows only one possible execution sequence, and constitutes no specific limitation.

The solution provided in this application is described below by using a specific example.

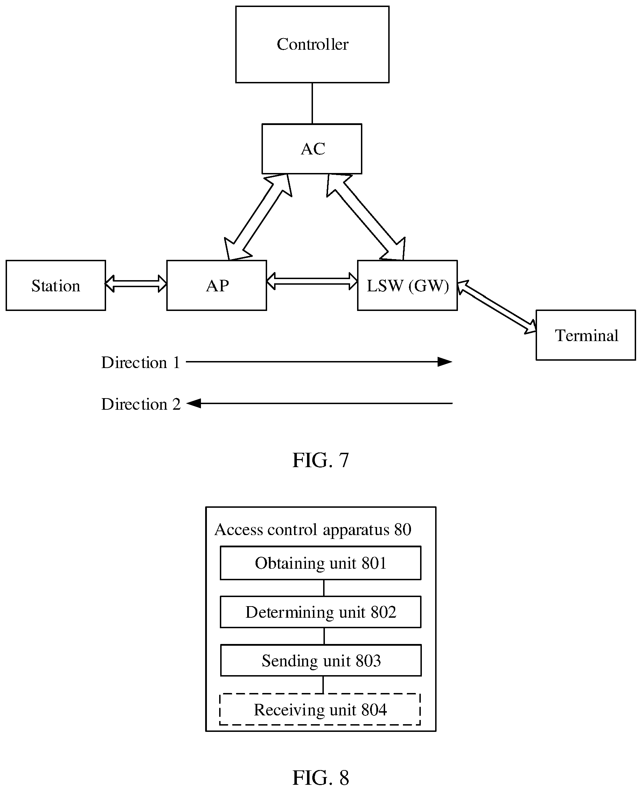

FIG. 7 shows a local area network architecture. A controller is responsible for centralized service orchestration and delivers a configuration to an AC by using NETCONF. The AC is responsible for collecting a subnet corresponding to an AP SSID and MAC and host routing information that are of a station (Station) accessed by the AP, generating a corresponding route, encapsulating the route by using a BGP-EVPN, and disseminating the route to an LSW (gateway (gateway, GW)). The AP indirectly interacts with the LSW (GW) by using the AC, to disseminate the EVPN route and establish a VXLAN tunnel.

The controller delivers static global access policies to the AC by using the NETCONF protocol. The AC synchronizes, to the LSW (GW) by using the extended BGP-EVPN protocol, an access policy corresponding to a destination group to which the accessed terminal on the LSW (GW) device belongs. The AC sends, to the AP through a CAPWAP channel, an access policy corresponding to a destination group to which the station belongs.

Further, the AC functions as an authentication point for a wireless user and performs authentication on a wireless terminal. Authorization security group information of the terminal is synchronized to the AP through the CAPWAP tunnel.

For a traffic packet in a direction 1 shown in FIG. 7, the AP directly performs VXLAN encapsulation on traffic of the station to obtain a VXLAN packet. The VXLAN packet carries a source group ID and is sent to a destination-end terminal. As a network device accessed by the destination terminal and as a policy enforcement point, the LSW (GW) obtains the source group ID in the VXLAN packet, then searches user authentication entries based on destination-end address information carried in the VXLAN packet to obtain a destination group ID, selects an access policy corresponding to the source group ID and the destination group ID, and determines whether to send the VXLAN packet to the destination-end terminal.

For a traffic packet in a direction 2 shown in FIG. 7, the LSW (GW) device performs VXLAN encapsulation on traffic of the terminal to obtain a VXLAN packet. The VXLAN packet carries a source group ID and is sent to a destination-end station. As a network device accessed by the destination station and as a policy enforcement point, the AP obtains the source group ID in the VXLAN packet, then searches user authentication entries based on destination-end address information carried in the VXLAN packet to obtain a destination group ID, selects an access policy corresponding to the source group ID and the destination group ID, and determines whether to send the VXLAN packet to the destination-end terminal.

The foregoing mainly describes the solutions provided in embodiments of this application from the perspective of interaction between network elements. It may be understood that, to implement the foregoing functions, the foregoing control point and policy enforcement point include corresponding hardware structures and/or software modules for performing the functions. A functional unit that implements the foregoing access control method on the control point and the policy enforcement point is referred to as an access control apparatus. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access control apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. There may be another division manner during actual implementation.

When each functional module is obtained through division corresponding to each function, FIG. 8 is a schematic diagram of a possible structure of an access control apparatus 80 deployed on the control point in the foregoing embodiments. The access control apparatus 80 may be a control point, or may be a functional module or a chip on a control point, or may be an apparatus used for matching a control point. As shown in FIG. 8, the access control apparatus 80 may include an obtaining unit 801, a determining unit 802, and a sending unit 803. The obtaining unit 801 is configured to perform the process S501 in FIG. 5 or FIG. 6. The determining unit 802 is configured to perform the process S502 in FIG. 5 or FIG. 6. The sending unit 803 performs the processes S503 and S508 in FIG. 5 or FIG. 6. All related content of the steps in the foregoing method embodiments may be cited in function descriptions of corresponding functional modules. Details are not described herein again.

Further, as shown in FIG. 8, the access control apparatus 80 may further include a receiving unit 804, configured to perform the process S512 in FIG. 5 or FIG. 6.

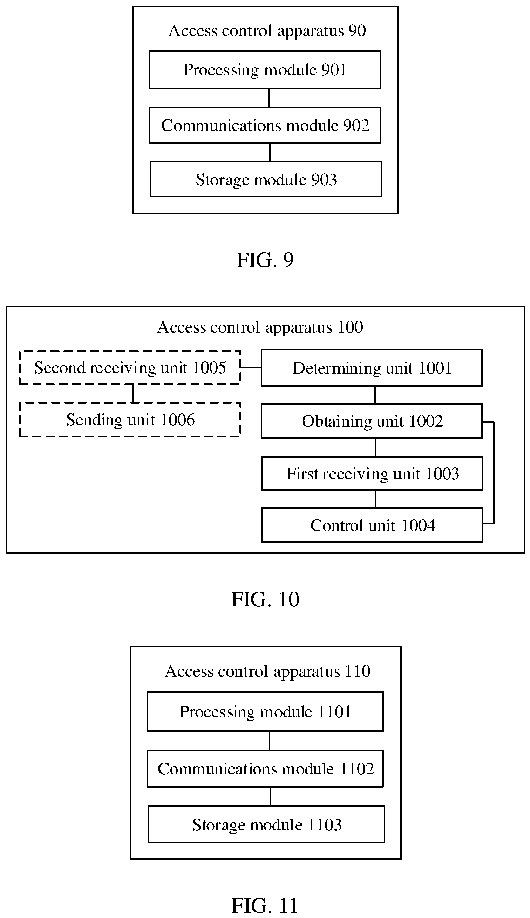

When an integrated unit is used, FIG. 9 is a schematic diagram of a possible structure of an access control apparatus 90 deployed on the control point in the foregoing embodiments. The access control apparatus 90 may be a control point, or may be a functional module or a chip on a control point, or may be an apparatus used for matching a control point. The access control apparatus 90 may include a processing module 901 and a communications module 902. The processing module 901 is configured to control and manage an action of the access control apparatus 90. For example, the processing module 901 is configured to perform the processes S501 and S502 in FIG. 5 or FIG. 6, and the processing module 901 may be further configured to perform, by using the communications module 902, the processes S503 and S508 in FIG. 5 or FIG. 6. The access control apparatus 90 may further include a storage module 903, configured to store program code and data of the access control apparatus 90.

The processing module 901 may be the processor 401 in an entity structure of the access control apparatus 40 shown in FIG. 4, and may be a processor or a controller. For example, the processing module 901 may be a CPU, a general-purpose processor, a DSP, an ASIC, an FPGA or another programmable logic device, a transistor logic device, a hardware component, or any combination thereof. The processing module 901 may implement or execute various example logical blocks, modules, and circuits described with reference to content disclosed in this application. Alternatively, the processing module 901 may be a combination for implementing computing functions, such as a combination of one or more microprocessors, a combination of a DSP and a microprocessor, or the like. The communications module 902 may be the transceiver 403 in an entity structure of the access control apparatus 40 shown in FIG. 4. The communications module 902 may be a communications port, a transceiver, a transceiver circuit, a communications interface, or the like. Alternatively, the communications interface may communicate with another device through the foregoing element that has receiving and sending functions. The foregoing element that has receiving and sending functions may be implemented through an antenna and/or a radio frequency apparatus. The storage module 903 may be the memory 402 in an entity structure of the access control apparatus 40 shown in FIG. 4.

When the processing module 901 is a processor, the communications module 902 is a transceiver, and the storage module 903 is a memory, the access control apparatus 90 in FIG. 9 in embodiments of this application may be the access control apparatus 40 shown in FIG. 4.

As described above, the access control apparatus 80 or the access control apparatus 90 provided in this embodiment of this application may be configured to implement functions of the control point in the method implemented in embodiments of this application. For ease of description, only a part related to this embodiment of this application is shown. For specific undisclosed technical details, refer to embodiments of this application.

When each functional module is obtained through division corresponding to each function, FIG. 10 is a schematic diagram of a possible structure of an access control apparatus 100 deployed on the policy enforcement point in the foregoing embodiments. The access control apparatus 100 may be a policy enforcement point, or may be a functional module or a chip on a policy enforcement point, or may be an apparatus used for matching a policy enforcement point. As shown in FIG. 10, the access control apparatus 100 may include a determining unit 1001, an obtaining unit 1002, a first receiving unit 1003, and a control unit 1004. The determining unit 1001 is configured to perform the process S504 in FIG. 5 or FIG. 6. The obtaining unit 1002 performs the process S505 in FIG. 5 or FIG. 6. The first receiving unit 1003 is configured to perform the process S506 in FIG. 5 or FIG. 6. The control unit 1004 is configured to perform the process S507 in FIG. 5 or FIG. 6. All related content of the steps in the foregoing method embodiments may be cited in function descriptions of corresponding functional modules. Details are not described herein again.

Further, as shown in FIG. 10, the access control apparatus 100 may further include a second receiving unit 1005 and a sending unit 1006. The second receiving unit 1005 is configured to perform the process S509 in FIG. 6. The sending unit 1006 is configured to perform the processes S510 and S511 in FIG. 6.

When an integrated unit is used, FIG. 11 is a schematic diagram of a possible structure of an access control apparatus 110 deployed on the policy enforcement point in the foregoing embodiments. The access control apparatus 110 may be a policy enforcement point, or may be a functional module or a chip on a policy enforcement point, or may be an apparatus used for matching a policy enforcement point. The access control apparatus 110 may include a processing module 1101 and a communications module 1102. The processing module 1101 is configured to control and manage an action of the access control apparatus 110. For example, the processing module 1101 is configured to perform the processes S503, S504, and S506 in FIG. 5 or FIG. 6 by using the communications module 1102. The processing module 1101 is configured to perform the process S505 in FIG. 5 or FIG. 6. The access control apparatus 110 may further include a storage module 1103, configured to store program code and data of the access control apparatus 110.

The processing module 1101 may be the processor 401 in an entity structure of the access control apparatus 40 shown in FIG. 4, and may be a processor or a controller. For example, the processing module 1101 may be a CPU, a general-purpose processor, a DSP, an ASIC, an FPGA or another programmable logic device, a transistor logic device, a hardware component, or any combination thereof. The processing module 1101 may implement or execute various example logical blocks, modules, and circuits described with reference to content disclosed in this application. Alternatively, the processing module 1101 may be a combination for implementing computing functions, such as a combination of one or more microprocessors, a combination of a DSP and a microprocessor, or the like. The communications module 1102 may be the transceiver 403 in an entity structure of the access control apparatus 40 shown in FIG. 4. The communications module 1102 may be a communications port, a transceiver, a transceiver circuit, a communications interface, or the like. Alternatively, the communications interface may communicate with another device through the foregoing element that has receiving and sending functions. The foregoing element that has receiving and sending functions may be implemented through an antenna and/or a radio frequency apparatus. The storage module 1103 may be the memory 402 in an entity structure of the access control apparatus 40 shown in FIG. 4.

When the processing module 1101 is a processor, the communications module 1102 is a transceiver, and the storage module 1103 is a memory, the access control apparatus 110 in FIG. 11 in embodiments of this application may be the access control apparatus 40 shown in FIG. 4.

As described above, the access control apparatus 100 or the access control apparatus 110 provided in this embodiment of this application may be configured to implement functions of the policy enforcement point in the method implemented in embodiments of this application. For ease of description, only a part related to this embodiment of this application is shown. For specific undisclosed technical details, refer to embodiments of this application.

According to another aspect, this application provides an access control system, including an apparatus configured to perform functions of the control point in the foregoing method, and one or more apparatuses configured to perform functions of the first policy enforcement point in the foregoing method.

In another form of this embodiment, a computer-readable storage medium storing instructions is provided, and when the instructions are executed, the access control method in the foregoing method embodiments is performed.

In another form of this embodiment, a computer program product including instructions is provided, and when the computer program product runs on a computer, the computer is enabled to perform the access control method in the foregoing method embodiments.

An embodiment of this application further provides a chip system. The chip system includes a processor, configured to implement the technical methods in embodiments of the present invention. In a possible design, the chip system further includes a memory, configured to store program instructions and/or data that are/is necessary in this embodiment of the present invention. In a possible design, the chip system further includes a memory, configured to enable the processor to invoke application program code stored in the memory. The chip system may include one or more chips, or may include a chip and another discrete component. This is not specifically limited in this embodiment of this application.

A person skilled in the art may clearly understand that, for the purpose of convenient and brief description, for detailed working processes of the foregoing system, apparatuses, and units, refer to corresponding processes in the foregoing method embodiments. Details are not described herein again.

A person skilled in the art should be aware that in one or more of the foregoing examples, the functions described in this application may be implemented by using hardware, software, firmware, or any combination thereof. When software is used to implement the functions, the functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer. Aperson skilled in the art may clearly understand that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division. There may be another division manner during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in an electrical form or another form.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of hardware in addition to a software functional unit.

In embodiments of this application, content corresponding to a solid-line box may be alternatively optional.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) to perform some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An access control method, comprising:
obtaining, by a control point, a correspondence between a plurality of groups and a plurality of access policies;
determining, by the control point, that a user in a first group accesses a network by using a first policy enforcement point, wherein the first group belongs to the plurality of groups; and
sending, by the control point to the first policy enforcement point, a first access policy corresponding to the first group, wherein the first access policy belongs to the plurality of access policies, and the first access policy is used to determine whether the first group is accessible by a second group.

2. The method according to claim 1, further comprising:
sending, by the control point to a second policy enforcement point, a second access policy corresponding to the first group, wherein the second access policy belongs to the plurality of access policies, and the second access policy is used to determine whether the first group is capable of accessing a third group that accesses the network by using the second policy enforcement point.

3. The method according to claim 1 or 2, wherein the first policy enforcement point is an authentication point for the user in the first group, and the method further comprises:
receiving, by the control point, a request message from the first policy enforcement point, wherein the request message is used to request the first access policy.

4. The method according to any one of claims 1 to 3, wherein the sending, by the control point to the first policy enforcement point, a first access policy corresponding to the first group comprises:
sending, by the control point to the first policy enforcement point by using a control and provisioning of wireless access points CAPWAP protocol or a border gateway protocol BGP-ethernet virtual private network EVPN protocol, the first access policy corresponding to the first group.

5. The method according to any one of claims 1 to 4, wherein the first policy enforcement point is an access layer device.

6. An access control method, comprising:
determining, by a policy enforcement point, that a user requesting to access a network belongs to a first group;
obtaining, by the policy enforcement point from a control point, a first access policy corresponding to the first group, wherein the first access policy is used to determine whether the first group is accessible by a second group;
receiving, by the policy enforcement point, a first packet whose destination is the user and group information indicating that a sender of the first packet belongs to the second group; and
determining, by the policy enforcement point based on the first access policy and the group information, whether to send the first packet to the user.

7. The method according to claim 6, further comprising:
receiving, by the policy enforcement point, a second packet sent by the user; and
sending, by the policy enforcement point, the second packet and an identifier of the first group based on a destination of the second packet.

8. The method according to claim 7, wherein the sending, by the policy enforcement point, the second packet and an identifier of the first group based on a destination of the second packet comprises:
sending, by the policy enforcement point, the second packet and the identifier of the first group through a virtual extensible local area network VXLAN tunnel.

9. The method according to any one of claims 6 to 8, wherein the policy enforcement point is an authentication point for the user in the first group, and the obtaining, by the policy enforcement point from a control point, a first access policy corresponding to the first group comprises:
sending, by the policy enforcement point, a request message to the control point, wherein the request message is used to request an access policy corresponding to the first group; and
receiving, by the policy enforcement point from the control point, the first access policy corresponding to the first group.

10. The method according to any one of claims 6 to 9, wherein the policy enforcement point is an access layer device.

11. An access control apparatus, comprising:
an obtaining unit, configured to obtain a correspondence between a plurality of groups and a plurality of access policies;
a determining unit, configured to determine that a user in a first group accesses a network by using a first policy enforcement point, wherein the first group belongs to the plurality of groups; and
a sending unit, configured to send, to the first policy enforcement point, a first access policy corresponding to the first group, wherein the first access policy belongs to the plurality of access policies, and the first access policy is used to determine whether the first group is accessible by a second group.

12. The apparatus according to claim 11, wherein the sending unit is further configured to:
send, to a second policy enforcement point, a second access policy corresponding to the first group, wherein the second access policy belongs to the plurality of access policies, and the second access policy is used to determine whether the first group is capable of accessing a third group that accesses the network by using the second policy enforcement point.

13. The apparatus according to claim 11 or 12, wherein the first policy enforcement point is an authentication point for the user in the first group, and the apparatus further comprises:
a receiving unit, configured to receive a request message from the first policy enforcement point, wherein the request message is used to request the first access policy.

14. The apparatus according to any one of claims 11 to 13, wherein the sending unit is specifically configured to:
send, to the first policy enforcement point by using a control and provisioning of wireless access points CAPWAP protocol or a border gateway protocol BGP-ethernet virtual private network EVPN protocol, the first access policy corresponding to the first group.

15. The apparatus according to any one of claims 11 to 14, wherein the first policy enforcement point is an access layer device.

16. An access control apparatus, comprising:
a determining unit, configured to determine that a user requesting to access a network belongs to a first group;
an obtaining unit, configured to obtain, from a control point, a first access policy corresponding to the first group, wherein the first access policy is used to determine whether the first group is accessible by a second group;
a first receiving unit, configured to receive a first packet whose destination is the user and group information indicating that a sender of the first packet belongs to the second group; and
a control unit, configured to determine, based on the first access policy and the group information, whether to send the first packet to the user.

17. The apparatus according to claim 16, wherein the apparatus further comprises:
a second receiving unit, configured to receive a second packet sent by the user; and
a sending unit, configured to send the second packet and an identifier of the first group based on a destination of the second packet.

18. The apparatus according to claim 17, wherein the sending unit is specifically configured to:
send the second packet and the identifier of the first group through a virtual extensible local area network VXLAN tunnel.

19. The apparatus according to any one of claims 16 to 18, wherein a policy enforcement point to which the apparatus belongs is an authentication point for the user in the first group, and the obtaining unit is specifically configured to:
send a request message to the control point, wherein the request message is used to request an access policy corresponding to the first group; and
receive, from the control point, the first access policy corresponding to the first group.

20. The apparatus according to any one of claims 16 to 19, wherein the policy enforcement point to which the apparatus belongs is an access layer device.

21. A control point, wherein the control point comprises a processor and a memory;
the memory is connected to the processor, and the memory is configured to store computer instructions; and when the processor executes the computer instructions, the control point performs the access control method according to any one of claims 1 to 5.

22. A policy enforcement point, wherein the policy enforcement point comprises a processor and a memory; the memory is connected to the processor, and the memory is configured to store computer instructions; and when the processor executes the computer instructions, the policy enforcement point performs the access control method according to any one of claims 6 to 10.

23. An access control system, wherein the access control system comprises the control point according to claim 21 and one or more policy enforcement points according to claim 22.

24. A computer-readable storage medium, wherein the computer-readable storage medium comprises instructions; and when the instructions are run on a computer, the computer is enabled to perform the access control method according to any one of claims 1 to 10.
